**Europäisches Patentamt**

**European Patent Office**

**Office européen des brevets**

(19)

(11) Veröffentlichungsnummer: **0 463 166 A1**

## (12) EUROPÄISCHE PATENTANMELDUNG
### veröffentlicht nach Art. 158 Abs. 3 EPÜ

(21) Anmeldenummer: **90913570.9**

(22) Anmeldetag: **29.12.89**

(86) Internationale Anmeldenummer: **PCT/SU89/00341**

(87) Internationale Veröffentlichungsnummer: **WO 91/10124 (11.07.91 91/15)**

(51) Int. Cl.⁵: **G01N 21/53**

(43) Veröffentlichungstag der Anmeldung: **02.01.92 Patentblatt 92/01**

(84) Benannte Vertragsstaaten: **BE DE FR IT SE**

(71) Anmelder: **SREDNEAZIATSKY NAUCHNO-ISSLEDOVATELSKY I PROEKTNY INSTITUT TSVETNOI METTALLURGII**
ul. Pushkina, 59
Tashkent, 700000(SU)

(72) Erfinder: **MARTYNOV, Nikolai Vasilievich**
massiv Junus-Abad, kvartal 18, 16-95
Tashkent, 700114(SU)
Erfinder: **ZAITSEV, Mikhail Gerasimovich**
ul. Ulugbeka, 77-28
Almalyk, 702400(SU)

(74) Vertreter: **Patentanwälte Zellentin & Partner**
Zweibrückenstrasse 15
W-8000 München 2(DE)

(54) **VORRICHTUNG ZUR MESSUNG DER OPTISCHEN DICHTE VON GAS.**

(57) Die Erfindung betrifft die Kontrolle von Stoffen im optischen Verfahren.

Die Einrichtung zur Messung der optischen Dichte von Gasen enthält ein Gehäuse (1), in dem längs einer optischen Achse (4) ein Strahler (2), eine Meß-Durchströmkammer (5) und ein Fotoempfänger (7) untergebracht sind. An den Fotoempfänger (7) ist eine Reihenschaltung aus einem Verstärker (8), einem logarithmischen Umwandler (9) und einem Registrierer (10) elektrisch angeschlossen. Erfindungsgemäß sind der Strahler (2) und der Fotoempfänger (7) jeweils in der Nähe der Stirnwand eines Blindkanals (12 bzw. 13) angeordnet, der im Gehäuse (1) ausgeführt ist. Die Kanäle (12, 13) stehen mit der Kammer (5) in Verbindung, und die Querschnittsfläche dieser Kanäle ist mindestens achtmal so gering wie die der Kammer (5). Die Tiefe L der Kanäle (12, 13) beträgt mindestens ein 8-faches ihrer Halbmesser.

Die Erfindung ist vorzugsweise zur Analyse der optischen Dichte von Kraftfahrzeugauspuffgasen anwendbar.

FIG.1

Die vorliegende Erfindung betrifft die Kontrolle von Stoffen nach dem optischen Verfahren und bezieht sich insbesondere auf eine Einrichtung zur Messung der optischen Dichte von Gasen.

Stand der Technik

Bekannt ist eine Einrichtung zur Messung der optischen Dichte von Gasen (SU, A, 1203420), welche einen an die Speisequelle angeschlossenen Strahler, danachin seine Strahlungsrichtung geseheneinen durch die Innenfläche des zylinderförmigen Stutzens begrenzten Meßraum und einen Fotoempfänger enthält.

Der Strahler, der zylinderförmige Stutzen und der Fotoempfänger sind starr am Gehäuse befestigt. Der Meßraum ist unter einem rechten Winkel durch einen Stutzen zur Zufuhr eines zu analysierenden Gases geschnitten, der eine Eintritts- und eine Austrittsöffnung für den genannten Raum aufweist.

An den Ausgang des Fotoempfängers ist eine Reihenschaltung eines Verstärkers, eines logarithmischen Umwandlers und einer Registriereinrichtung angeschlossen. Die bekannte Einrichtung zur Messung der optischen Dichte von Gasen ist mit einem System zum Schutz des Strahlers und Fotoempfängers vor Verschmutzungen versehen, welches eine Druckluftquelle umfaßt, die über ein Paar Druckluftzufuhrstutzen mit dem Meßraum in den Bereichen der Strahlungsquelle und des Fotoempfängers verbunden ist. Aus dem Bereich der Strahlungsquelle oder des Fotoempfängers wird die zum Schutz vor zu analysierenden Gasen zugeführte Druckluft mit Hilfe eines anderen Paars von Stutzen an die Austrittsöffnung des zur Zufuhr des zu analysierenden Gases dienenden Stutzens abgeführt.

In das System zum Schutz des Strahlers und des Fotoempfängers ist ein Druckgeber eingeführt, der mit der Druckluftquelle verbunden ist und den Druck des Luftstroms je nach dem Druck des zu analysierenden Gases auf ein Signal des Druckgebers regelt, der im Meßraum Platz findet.

Die bekannte Einrichtung funktioniert wie folgt.

Ein Strom des zu analysierenden Gases gelangt aus dem Auspuffrohr über die Eintrittsöffnung in den Gaszufuhrstutzen. Darauf überquert der Gasstrom den Meßraum, durch welchen senkrecht zum Gasstrom ein Lichtstrahl vom Strahler zum Fotoempfänger läuft.

Eine Differenz zwischen den Intensitäten des ausgestrahlten Lichtstroms und des vom Fotoempfänger aufgenommenen Lichtstroms wird erfaßt und durch den Fotoempfänger (einen fotoelektrischen Wandler) in ein entsprechendes elektrisches Signal verwandelt. Dieses wird mit Hilfe des Verstärkers verstärkt, durch den logarithmischen Umwandler in eine Größe umgewandelt, die der optischen Dichte des zu analysierenden Gases proportional ist, und auf dem Registriergerät dargestellt.

Gleichzeitig mit der Zufuhr des zu analysierenden Gases führt man Druckluft von der Druckluftquelle zu. Die Druckluft strömt über zwei Stutzen in den Meßraum in den dem Strahler nahen Bereich und in den Bereich in der Nähe des Fotoempfängers, wodurch der Strahler und der Empfänger vor Staub- und Rußteilchen geschützt werden, die in den Meßraum samt dem zu analysierenden Gas eindringen.

Eine Änderung des Drucks im Strom des zu analysierenden Gases wird vom Druckgeber erfaßt, und je nach diesem Druckwert wird die Arbeit der Druckluftquelle geregelt.

Also wird zur Gewährleistung der Messung der optischen Dichte von Gasen mit hinreichender Genauigkeit in der genannten Einrichtung das System zum Schutz des Strahlers und des Fotoempfängers benutzt, das eine Druckluftquelle und einen Druckgeber enthält, welche die Abmessungen der Einrichtung zur Messung der optischen Dichte von Gasen auf solche Maße vergrößern, die es nicht erlauben, die Einrichtung als tragbares Gerät einzusetzen.

Die Einrichtung dieser Bauart benutzt man stationär.

Außerdem müssen die Abmessung und Form des Stutzens zur Zufuhr des zu analysierenden Gases, über den das Gas in den Meßraum gelangt, der Abmessung und Form des Auspuffrohrs entsprechen, was die Anwendung der beschriebenen Einrichtung begrenzt oder einen Satz von besonderen Ansatzrohren erfordert.

In Abhängigkeit von der Fahrzeugbauart können die Auspuffrohre in verschiedener Weise, z.B. vertikal oder an für Messungen schwer zugänglichen Stellen angeordnet werden.

Alle obenaufgezählten Faktoren setzen entweder die Meßgenauigkeit stark herab, oder machen die Messung der optischen Dichte von Auspuffgasen mit Hilfe der beschriebenen Einrichtung überhaupt unmöglich.

Ferner ist eine Einrichtung zur Messung der optischen Dichte von Gasen bekannt (V.I.Litvak "Fotoelektrische Geber in Überwachungs-, Steuer- und Regelungssystemen", 1966, Verlag "Nauka", Moskau, S.342), welche ein Gehäuse enthält, in dem ein an die Speisequelle angeschlossener Lichtstrahler, eine in seinem Strahlengang angeordnete und in einer gleichen Achse mit der Quelle liegende Meß-Durchströmkammer, die durch die Innenfläche des Gehäuses begrenzt ist und Durchgangsöffnungen aufweist, und ein Fotoempfänger untergebracht sind.

Der Strahler, der Stutzen und der Fotoempfänger sind mit Hilfe dieses Gehäuses starr befestigt. Die Öffnungen sind in zwei zur optischen Achse symmetrischen Reihen gleichachsig angeordnet. An den Ausgang des Fotoempfängers ist elektrisch eine Reihenschaltung aus einem Verstärker, einem logarithmischen Umwandler und einem Registrierer angeschlossen.

Der Strahler und der Fotoempfänger sind im Gehäuse auf verschiedenen Seiten der Meßkammer angeordnet und begrenzen die letztere von den Stirnseiten her.

Die Einrichtung bringt man in den Strom eines zu analysierenden Gases senkrecht zur Bewegungsrichtung dieses Stroms so ein, daß die Achsen der gleichachsigen Paare der Öffnungen zweier symmetrischer Reihen mit der Strömungsrichtung des Gasstromes übereinstimmen.

Diese Einrichtung arbeitet wie folgt. Man bringt das Gehäuse in den Strom eines zu analysierenden Gases senkrecht zu dessen Strömung ein. Rauchhaltige zu analysierende Gase strömen in die Durchgangsöffnungen des Gehäuses der einen Reihe ein, passieren die Meßkammer und treten aus den Öffnungen der anderen Reihe aus.

Ein Lichtstrom vom Strahler durchläuft die Meßkammer, die mit den zu analysierenden Gasen gefüllt ist, zur aktiven Oberfläche des Fotoempfängers hin. Das Vorhandensein von Ruß- und Staubteilchen ruft eine teilweise Absorbtion des Lichtstromes hervor. Eine Änderung der Lichtstromintensität wird vom Fotoempfänger erfaßt und in ein entsprechendes elektrisches Signal umgewandelt. Das Signal des Fotoempfängers wird mit dem Verstärker verstärkt, mit Hilfe des logarithmischen Umwandlers in eine Größe umgewandelt, die der optischen Dichte des zu analysierenden Gases proportional ist, und auf dem Registriergerät dargestellt.

Die Anordnung des Strahlers und des Fotoempfängers im Meßraum von den Stirnseiten der Kammer her führt zu einem intensiven Abscheiden von Ruß- und Staubteilen an den Arbeitsflächen des Strahlers und des Fotoempfängers, was die Meßergebnisse verfälscht. Das Abscheiden der Staub- und Rußteilchen setzt die Meßgenauigkeit herab.

Offenbarung der Erfindung

Der Erfindung liegt die Aufgabe zugrunde, eine Einrichtung zur Messung der optischen Dichte von Gasen mit einer solchen Bauart der Meßkammer zu schaffen, bei der die aktiven Arbeitsflächen des Strahlers und des Fotoempfängers vor dem Abscheiden von Staub- und Rußteilchen geschützt sind, die in einer großen Menge im zu analysierenden Gas enthalten sind, wodurch sich eine erhöhte Meßgenauigkeit ergibt.

Die gestellte Aufgabe wird dadurch gelöst, daß in der Einrichtung zur Messung der optischen Dichte von Gasen, die ein Gehäuse enthält, in dem ein Lichtstrahler, in seinem Strahlangang angeordnet und in einer optischen Achse liegend eine durch die Innenfläche des Gehäuses begrenzte Meß-Durchströmkammer mit einer Vielzahl von Durchgangsöffnungen, die zum Durchströmen der zu analysierenden Gase durch die Kammer unter einem Winkel zur optischen Achse vorgerichtet sind, und ein Fotoempfänger untergebracht sind, an dessen Ausgang eine Reihenschaltung eines Verstärkers, eines logarithmischen Umwandlers und eines Registrieres angeschlossen ist, gemäß der Erfindung der Lichtstrahler und der Fotoempfänger jeweils in der Nähe der Stirnwand des jeweiligen Blindkanals, der im Gehäuse ausgeführt ist und mit der Meß-Durchströmkammer in Verbindung steht, angeordnet ist, wobei die Querschnittsfläche des Blindkanals um mindestens das 8-fache geringer ist als die der Meß-Durchströmkammer und seine Tiefe L mindestens ein 4-faches des größten Querlängenmaßes dieses Kanals beträgt.

Zum wirksameren Schutz des Strahlers und des Fotoempfängers gegen Staub- und Rußteilchen des zu analysierenden Gases ist es vorteilhaft, daß die Blindkanäle einen Rundquerschnitt aufweisen und in ihnen senkrecht zur optischen Achse Blenden mit einer Zentralöffnung untergebracht sind, deren Halbmesser $\epsilon$ aus folgender Ungleichung

$$\epsilon < r - 1 \cdot \frac{r + S}{L}$$

gewählt wird, wobei mit

r der Halbmesser des Kanals (in mm),
I der Abstand der Blende von der nächsten Stirnwand der Meß-Durchströmkammer (in mm),
S der Halbmesser der Arbeitsfläche des Strahlers (in mm),
L der Abstand des Strahlers von der nächsten Stirnwand der Meß-Durchströmkammer (in mm)

bezeichnet sind.

Bei der Einrichtung zur Messung der optischen Dichte von Gasen, welche erfindungsgemäß ausgeführt ist, werden dank der im Gehäuse ausgeführten Blindkanäle, an deren Stirnwänden der Lichtstrahler und der Fotoempfänger, der ein durch die Innenwände der Blindkanäle begrenztes Luftvolumen dämpft, angeordnet sind, die aktiven Arbeitsflächen des Strahlers und des Fotoempfängers vor undurchsichtigen Teilchen des zu analysierenden Gases geschützt, was die Meßgenauigkeit erhöht.

Kurze Beschreibung der Zeichnungen

Im folgenden wird die Erfindung an Hand einer konkreten Ausführungsform der Einrichtung zur Messung der optischen Dichte von Gasen unter Bezugnahme auf Zeichnungen näher erläutert. Es zeigt

Fig.1 einen Längsschnitt durch die erfindungsgemäße Einrichtung zur Messung der optischen Dichte von Gasen;

Fig.2 einen Schnitt nach Linie II-II in Fig.1 in vergrößertem Maßstab.

Ausführungsbeispiel der Erfindung

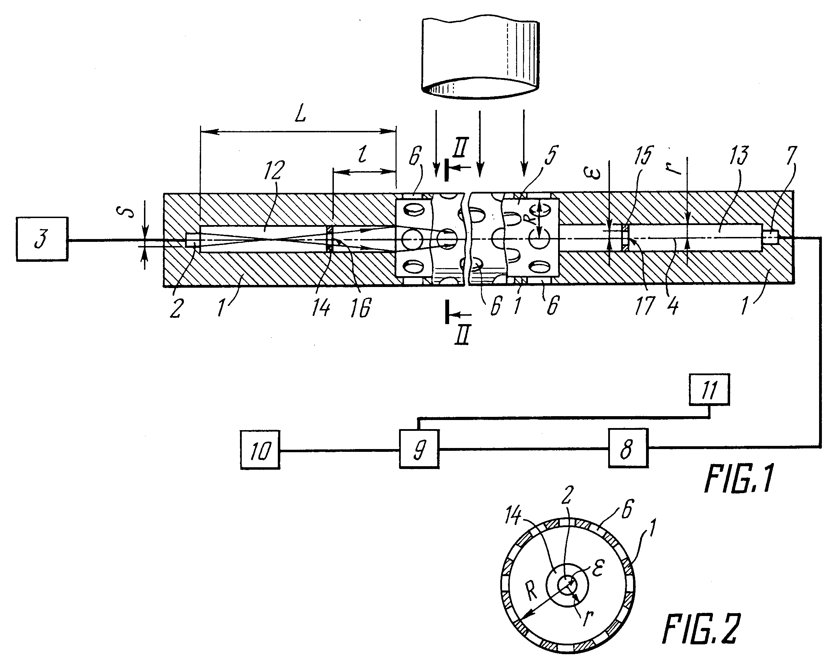

Die Einrichtung zur Messung der Dichte von Gasen nach Fig.1,2 enthält ein zylindrisches Gehäuse 1, in dem ein Lichtstrahler 2, z.B. eine Leuchtdiode, welcher an eine Speisequelle 3, z.B. an einen Impulsstromgenerator, angeschlossen ist, Platz findet. Im Gehäuse 1 ist in Strahlungsrichtung des Lichtstrahlers 2 in ein und derselben optischen Achse 4 mit ihm eine Meß-Durchströmkammer 5 angeordnet, die durch die zylindrische Innenfläche des Gehäuses 1 begrenzt ist. Die zylindrische Fläche des Gehäuses hat eine Vielzahl von Durchgangsöffnungen 6, die zum Eintritt und Austritt der zu analysierenden Gase in bzw. aus der Meß-Durchströmkammer 5 vorgesehen sind. Ferner ist im Gehäuse 1 im Strahlengang in der optischen Achse 4 ein Fotoempfänger 7 untergebracht. An den Fotoempfänger 7 ist eine Reihenschaltung eines Verstärkers 8, eines logarithmischen Umwandlers 9 und eines Registrierers 10 elektrisch angeschlossen. Mit dem logarithmischen Umwandler 9 ist eine Bezugsspannungquelle 11 verbunden.

Der Lichtstrahler 2 und der Fotoempfänger 7 sind jeweils in der Nähe der Stirnwand ihres jeweiligen Blindkanals 12 bzw. 13, die im Gehäuse 1 ausgeführt sind, angeordnet. Die Kanäle 12, 13 sind mit der Meß-Durchströmkammer 5 auf verschiedenen Stirnseiten der letzteren verbunden und verlaufen gleichachsig zur optischen Achse 4. Die Querschnittsfläche $Q_1$ der Kanäle 12, 13 (Fig.2) ist geringer als die Querschnittsfläche $Q_2$; und zwar hindestens um das 8-fache ($Q_2 \geq 8 \cdot Q_1$); bei der vorliegenden Ausführungsform ist die Querschnittsfläche der Kanäle 12, 13 (Fig.2) achtmal so klein wie die der Meß-Durchströmkammer 5.

Die Tiefe der Kanäle 12, 13 (Fig.1) beträgt mindestens ein 4-faches des größten Querschnittslängenmaßes dieser Kanäle 12, 13. Bei der vorliegenden Ausführungsform der efindungsgemäßen Einrichtung weisen die Blindkanäle 12, 13 einen Rundquerschnitt auf, während ihre Tiefe L das Achtfache des Halbmessers oder das Vierfache des Durchmessers des Querschnittes der Kanäle 12, 13 ($L = 8 \cdot r = 4d$) beträgt. In den Kanälen 12, 13 sind senkrecht zur optischen Achse 4 Blenden 14 bzw. 15 angeordnet.

Die Blenden 14, 15 haben jeweils Zentralöffnungen 16, 17, deren Halbmesser aus der Ungleichung

$$\varepsilon < r - 1 \cdot \frac{r + S}{L}$$

gewählt wird, worin mit

r der     Halbmesser der Kanäle 12 bzw. 13 (in mm),

l der     Abstand der Blende 14 bzw. 15 von der nächsten Stirnwand der Meß-Durchströmkammer 5 (in mm),

S der     Halbmesser der Arbeitsfläche des Strahlers 2 oder des Fotoempfängers 7 (in mm),

L der     Abstand des Strahlers 2 bzw. des Fotoempfängers 7 von der nächsten Stirnwand der Meß-Durchströmkammer 5 (in mm)

bezeichnet sind.

Da die Abmessungen des Lichtstrahlers 2 und des Fotoempfängers 7 vernachlässigbar sind, kann man die Tiefe des Kanals gleich dem Abstand des Strahlers 2 oder des Fotoempfängers 7 von der nächsten Stirnwand der Meß-Durchströmkammer 5 annehmen.

Um die Maße der Öffnung 16 in der Blende 14 zu bestimmen, die im Blindkanal 12 untergebracht ist, sind in die Ungleichung die Maße des Halbmessers r des Querschnitts des Kanals 12, des Halbmessers S des Strahlers 2 (der aktiven Arbeitsfläche des Strahlers 2) und des Abstandes L des Strahlers 2 von der nächstliegenden Stirnwand der Meß-Durchströmkammer 5 einzusetzen.

Um die Maße der Öffnung 17 in der Blende 15 zu ermitteln, die im Blindkanal 13 untergebracht ist, sind in die Ungleichung die Maße des Querschnittsradius des Kanals 13, des Halbmessers S des Fotoempfängers 7 (der aktiven Arbeitsfläche des Fotoempfängers) und des Abstandes L des Fotoempfängers 7 von der nächstliegenden Stirnwand der Meß-Durchströmkammer 5 einzusetzen.

Bei der vorliegenden Ausführungsform der erfindungsgemäßen Einrichtung sind die Halbmesser r des Querschnittes der Kanäle 12, 13 gleich groß, die Tiefen L der Kanäle 12, 13 einander gleich und die Abstände l ebenfalls gleich, so daß sich demnach gleiche Halbmesser $\varepsilon$ der Öffnungen 16, 17 der Blenden 14 bzw. 15 ergeben.

Die in Fig.1, 2 dargestellte Einrichtung zur Messung der optischen Dichte von Gasen funktioniert wie folgt.

Das Gehäuse 1 der Einrichtung bringt man in den Strom eines zu analysierenden Gases ein und montiert es z.B. am Auspuffrohr eines Fahrzeuges.

Die Einrichtung ordnet man so an, daß die optische Achse 4 senkrecht zur Bewegungsrichtung des Gasstromes liegt und das Gas selbst über die Durchgangsöffnungen 6 in die Meß-Durchströmkammer 5 gelangt.

Danach legt man die Speisung an den Lichtstrahler 2, den Verstärker 8, den logarithmischen Umwandler 9 und den Registrierer 10 an.

Hierbei strahlt der Strahler 2, z.B. eine Leuchtdiode, einen längs der optischen Achse 4 gerichteten Lichtstrom aus, der die das zu analysierende Gas enthaltende Meß-Durchströmkammer 5 passiert und vom Fotoempfänger 7 empfangen wird. Der so empfangene Strahlungsstrom wird in ein elektrisches Signal umgewandelt, welches durch den Verstärker 8 verstärkt, in einen Wert der optischen Dichte des zu analysierenden Gases durch den logarithmischen Umwandler 9 umgewandelt und auf dem Registrierer 10 dargestellt wird.

Dadurch, daß die Kanäle 12, 13 eng und lang ausgebildet sind, wird ein Dämpfungsluftvolumen gebildet, das durch die Wände der Kanäle 12, 13 begrenzt ist, wodurch verhindert wird, daß das zu analysierende Gas auf die Arbeitsflächen des Strahlers 2 und des Fotoempfängers 7 auftrifft, und wodurch diese Arbeitsflächen vor dem Abscheiden undurchsichtiger Komponenten des zu analysierenden Gases geschützt werden. Das heißt, die Kanäle 12, 13 besitzen einen großen Widerstand gegen den Strom des zu analysierenden Gases.

Es wurde versuchsweise festgestellt, daß in den Blindkanälen 12, 13, deren Querschnittsfläche um mindestens das Achtfache geringer als die der Meß-Durchströmkammer 5 ist und deren Tiefe dabei mindestens ein Achtfaches des Halbmessers r der Kanäle 12, 13 (oder ein Vierfaches des größten Querschnittslängenmaßes) beträgt, praktisch vollständig vermieden wird, daß das zu analysierende Gas mit undurchsichtigen Komponenten die Stirnwände der Kanäle 12, 13 erreicht, in deren Nähe der Strahler 2 und der Fotoempfänger 7 angeordnet sind.

Dabei werden 95% der in die Kanäle 12, 13 eingedrunggenen Komponenten an den Innenwänden in einem Abstand 4r von der nächstliegenden Stirnwand der Meß-Durchströmkammer 5 abgeschieden.

Jedoch übt das Abscheiden der erwähnten Komponenten an den Innenflächen der Kanäle 12, 13 in dem Maße, wie sich die abgeschiedene Schicht vergrößert, auf die Bildung des vom Empfänger 7 aufgenommenen Strahlungsstroms infolge einer Änderung der Geometrie des optischen Schemas und einer Änderung der Verhältnisse der direkten Strahlung zu deren Reflexionen von den Innenwänden der Kanäle 12, 13 einen Einfluß aus.

Durch die Anordnung der Blenden 14, 15 mit Öffnungen 16, 17, deren Halbmesser aus der angegebenen Ungleichung gewählt sind, werden Reflexionen des Lichtstroms von den Innenflächen der Kanäle 12, 13 vermieden, was dazu beiträgt, daß die Meßergebnisse der optischen Dichte weniger verfälscht werden, wodurch die Meßgenauigkeit erhöht wird.

Somit tritt kein zusätzlicher Meßfehler auf, der durch das Abscheiden der Komponenten eines zu analysierenden Gases an den Innenwänden der Kanäle 12, 13 bedingt ist.

Die Erfindung kann zur Bestimmung der Rauchdichte und des Staubgehaltes von Gasen, beispielsweise der Rauchdichte von Abgasen in Dieselfahrzeugen, verwendet werden.

## Patentansprüche

1. Einrichtung zur Messung der optischen Dichte von Gasen, die ein Gehäuse (1) enthält, in dem ein Lichtstrahler (2), eine in seinem Strahlengang angeordnete und in einer optischen Achse (4) liegende durch die Innenfläche des Gehäuses (1) begrenzte Meß-Durchströmkammer (5) mit einer Vielzahl von Durchgangsöffnungen (6), die zum Durchströmen der zu analysierenden Gase durch die Kammer (5) unter einem Winkel zur optischen Achse (4) vorgerichtet sind, und ein Fotoempfänger (7) untergebracht sind, an dessen Ausgang eine Reihenschaltung eines Verstärkers (8), eines logarithmischen Umwandlers (9) und eines Registrierers (10) angeschlossen ist, dadurch gekennzeichnet, daß der Lichtstrahler (2) und der Fotoempfänger (7) jeweils in der Nähe der Stirnwand ihres jeweiligen Blindkanals (12, 13), der im Gehäuse (1) ausgeführt ist und mit der Meß-Durchströmkammer (5) in Verbindung steht, angeordnet ist, wobei die Querschnittsfläche des Blindkanals (12, 13) um mindestens das 8-fache geringer ist als die der Meß-Durchströmkammer (5) und seine Tiefe L mindestens ein 4-faches des größten Querschnittlängenmaßes des Kanals (12, 13) beträgt.

2. Einrichtung nach Anspruch 1, dadurch gekennzeichnet, daß die Blindkanäle (12, 13) einen Rundquerschnitt aufweisen und in ihnen senkrecht zur optischen Achse (4) jeweilige Blenden (14, 15) mit einer Zentralöffnung (16, 17) untergebracht sind, deren Halbmesser $\epsilon$ aus folgender Ungleichung

$$\mathcal{E} < r - l \cdot \frac{r + S}{L}$$

gewählt wird, wobei mit

| r der | Halbmesser der Kanäle (12, 13) (in mm), |
|---|---|
| l der | Abstand der Blende (14, 15) von der nächsten Stirnwand der Meß-Durchströmkammer (5) (in mm), |
| S der | Halbmesser der Arbeitsfläche des Strahlers (2) (in mm), |
| L der | Abstand des Strahlers (2) von der nächsten Stirnwand der Meß-Durchströmkammer (5) (in mm) |

bezeichnet sind.

FIG.1

FIG.2

# INTERNATIONAL SEARCH REPORT

International Application No PCT/SU 89/00341

**I. CLASSIFICATION OF SUBJECT MATTER** (if several classification symbols apply, indicate all) 6

According to International Patent Classification (IPC) or to both National Classification and IPC

$IPC^5$: G 01 N 21/53

**II. FIELDS SEARCHED**

Minimum Documentation Searched 7

| Classification System | Classification Symbols |
|---|---|
| $IPC^5$ : | G 01 N 21/53, G 01 N 21/59, G 08 B 17/10 |

Documentation Searched other than Minimum Documentation
to the Extent that such Documents are Included in the Fields Searched 8

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | SU, A1, 65745 (E. M. Aristov et al.) 31 January 1946, the claims, the drawing | 1 |
| A | US, A, 3976891 (ELECTRA-TRONICS, INC.) 24 August 1976 the abstract, figure 7 | 1 |
| A | FR, A1, 2224754 (BAILEY METER COMPANY), 31 October 1974, the abstract, figure 1 | 1 |
| A | GB, A, 2148487 (PERKINS ENGINES GROUP LIMITED), 30 May 1985, the abstract, figure 1 | 1 |
| A | DE, A1, 3638472 (VOLKSWAGEN AG), 27 May 1987, the abstract, figure 1 | 1,2 |
| A | SU, A1, 1203410 (Gosudarstvenny autotransportny nauchno-issledovatelsky i proektny institut "GOSAVTO-TRANSNIIPROEKT"), 7 January 1986, the claims, the drawing | 1,2 |
| A | US, A, 3500450 (EDMUND JAMES PAYTON et al.) 10 March 1970, the abstract, figures 1,2 | 1,2 |
| A | GB, B, 1135146 (CENTRAL ELECTRICITY GENERATING BOARD) 27 November 1968, the abstract, figures 1,2 | 1,2 |
| A | V.I. Litvak "fotoelektricheskie datchiki v sistemakh | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 19 July 1990 (19.07.90) | 18 December 1990 (18.12.90) |
| International Searching Authority | Signature of Authorized Officer |
| ISA/SU | |

Form PCT/ISA/210 (second sheet) (January 1985)

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| | kontrolya, upravlenia i regulirovania", 1966, "Nauka", (Moscow), pages 342, figures 8.21 | 1 |
| A. | A.V. Klimenko "Metody i prileory dlya izmerenia kontsentratsii pyli", 1978, "Khimia", "Moscow", pages 129-131, figures 5.23 | 1,2 |